# EUROPÄISCHE PATENTSCHRIFT

(11) **EP 2 649 333 B1**
(45) Veröffentlichungstag und Bekanntmachung des Hinweises auf die Patenterteilung: **02.05.2018**
(21) Anmeldenummer: 11793779.7
(22) Anmeldetag: 07.12.2011
(51) Int. Cl.: F16C 33/51, F16C 33/46, F16C 19/36, F16C 33/36, F16C 33/56

(54) **KÄFIGSEGMENT EINES KEGELROLLENLAGERS UND KEGELROLLENLAGER**
CAGE SEGMENT OF A TAPERED-ROLLER BEARING, AND TAPERED-ROLLER BEARING
SEGMENT DE CAGE D'UN ROULEMENT À ROULEAUX CONIQUES ET ROULEMENT À ROULEAUX CONIQUES

(30) Priorität: 07.12.2010 DE 102010062526
(43) Veröffentlichungstag der Anmeldung: 16.10.2013
(73) Patentinhaber: Aktiebolaget SKF, 415 50 Göteborg (SE)
(72) Erfinder: GESSENDORFER, Matthias, 97509 Unterspiesheim (DE); LIANG, Baozhu, 97456 Hambach (DE); OESTREICHER, Winfried, 97525 Schwebheim (DE); WAHLER, Ralf, 97493 Bergrheinfeld (DE)
(74) Vertreter: Schonecke, Mitja
(86) Internationale Anmeldenummer: PCT/EP2011/072027
(87) Internationale Veröffentlichungsnummer: WO 2012/076583

(56) Entgegenhaltungen:
- DE-A1- 1 400 317
- DE-A1- 10 246 825
- DE-A1- 19 960 542
- DE-B3-102005 009 980
- JP-A- 2007 247 819
- JP-A- 2007 285 415
- JP-A- 2008 064 248
- US-A- 2 969 267

## Beschreibung

Die Erfindung betrifft ein Kegelrollenlager zur drehbaren Lagerung eines ersten Maschinenteils relativ zu einem zweiten Maschinenteil, insbesondere zur drehbaren Lagerung einer Rotorwelle einer Windkraftanlage.
Ein Käfigsegment eines derartigen Kegelrollenlagers ist aus der DE 10246825 A bekannt. Die bekannten Käfigsegmente können an ihren Stirnflächen aneinander gereiht werden, so dass mit einem vergleichsweise geringen Aufwand ein Käfig ausgebildet werden kann, der sich insbesondere für einen Einsatz bei sehr großen Wälzlagern mit verhältnismäßig kleinen Rollen eignet.
Aus der JP 2008082380 A ist ein Käfigsegment bekannt, das einen festen Schmierstoff aufweist, um die Wälzkörper am Käfigsegment zu fixieren. Aus der JP 2007247819 ist ein Kegerollenlager gemäß dem Oberbegriff des Anspruchs 1 bekannt. Angesichts des zunehmenden Bedarfs an immer größeren Wälzlagern, beispielsweise für Windkraftanlagen, werden Käfigkonzepte für immer höhere mechanische Belastungen benötigt. Mit der Größe der Wälzlager nimmt auch das Eigengewicht der eingesetzten Wälzkörper immer mehr zu, so dass auch aus diesem Grund immer stabilere Käfiganordnungen benötigt werden.
Der Erfindung liegt die Aufgabe zugrunde, ein Käfigdesign anzugeben, das sich für einen Einsatz bei sehr großen Wälzlagern, insbesondere bei einem Wälzlager einer Windkraftanlage, eignet.

Diese Aufgabe wird durch die Merkmalskombinationen der nebengeordneten Ansprüche gelöst. Ein Kegelrollenlager nicht gemäß der Erfindung zur drehbaren Lagerung eines ersten Maschinenteils relativ zu einem zweiten Maschinenteil weist konische Wälzkörper und Käfigsegmente auf. Die Käfigsegmente weisen je zwei einander gegenüber liegende Umfangsstege auf, die sich jeweils zwischen einem ersten Umfangsende und einem zweiten Umfangsende des Käfigsegments erstrecken. Weiterhin weisen die Käfigsegment je wenigstens zwei einander gegenüberliegende Verbindungsstege auf, welche die beiden Umfangsstege miteinander verbinden und gemeinsam mit den Umfangsstegen wenigstens eine Tasche zur Aufnahme eines konischen Wälzkörpers ausbilden. Die Umfangsstege und die Verbindungsstege weisen Taschenseiten auf, welche die Tasche begrenzen. Weiterhin weisen die Umfangsstege und die im Bereich des ersten Umfangsendes und des zweiten Umfangsendes angeordneten Verbindungsstege zu den Taschenseiten entgegengesetzte Umgebungsseiten auf. Die im Bereich des ersten Umfangsendes und des zweiten Umfangsendes angeordneten Verbindungsstege weisen jeweils auf ihrer Taschenseite und auf ihrer Umfangsseite eine konkav geformte erste Führungsfläche zum partiellen Umgreifen eines Wälzkörpers in dessen Umfangsrichtung auf. Die Umfangsstege stehen maximal so weit über das erste Umfangsende und das zweite Umfangsende über, dass sie die Umfangsstege eines weiteren, identisch ausgebildeten Käfigsegments nicht berühren können, wenn zwischen dem ersten Umfangsende des Käfigsegments und dem zweiten Umfangsende des weiteren Käfigsegments ein zur Aufnahme in die Tasche ausgebildeter Wälzkörper angeordnet ist. Die Käfigsegmente sind wälzkörpergeführt.
Zur ersten Führungsfläche und zur zweiten Führungsfläche werden jeweils nur Bereiche gerechnet, die im Betriebszustand des Kegelrollenlagers ohne eine Verformung des Käfigsegments die Mantelfläche eines Wälzkörpers berühren können.

Die Käfigsegmente des Wälzlagers haben den Vorteil, dass sie sich für den Einsatz bei sehr großen Kegelrollenlagern eignen und den dort auftretenden Belastungen standhalten. Weiterhin zeichnen sich die Käfigsegmente durch eine gute Montierbarkeit bei gleichzeitig geringen Kosten und geringem Gewicht aus. Die Taschenform ermöglicht eine sichere Aufnahme des Wälzkörpers und eine zuverlässige Führung des Käfigsegments am Wälzkörper.

Die Verbindungsstege können jeweils auf ihrer Taschenseite eine konkav geformte zweite Führungsfläche zum partiellen Umgreifen eines Wälzkörpers in dessen Umfangsrichtung aufweisen. Dies hat den Vorteil, dass die Führungsverhältnisse präzise vorgegeben werden. Das erfindungsgemäße Kegelrollenlager zur drehbaren Lagerung eines ersten Maschinenteils relativ zu einem zweiten Maschinenteil weist konische Wälzkörper und Käfigsegmente mit je zwei einander gegenüber liegenden Umfangsstegen auf, die sich jeweils zwischen einem ersten Umfangsende und einem zweiten Umfangsende des Käfigsegments erstrecken. Weiterhin weisen die Käfigsegmente je wenigstens zwei einander gegenüberliegende Verbindungsstege auf, welche die beiden Umfangsstege miteinander verbinden und gemeinsam mit den Umfangsstegen wenigstens eine Tasche zur Aufnahme eines konischen Wälzkörpers ausbilden. Die Umfangsstege und die Verbindungsstege weisen Taschenseiten auf, welche die Tasche begrenzen. Weiterhin weisen die Umfangsstege und die im Bereich des ersten Umfangsendes und des zweiten Umfangsendes angeordneten Verbindungsstege zu den Taschenseiten entgegengesetzte Umgebungsseiten auf. Die Verbindungsstege weisen jeweils auf ihrer Taschenseite eine konkav geformte erste Führungsfläche und eine konkav geformte zweite Führungsfläche und die im Bereich des ersten Umfangsendes oder des zweiten Umfangsendes angeordneten Verbindungsstege weisen zusätzlich jeweils auf ihrer Umfangsseite eine konkav geformte erste Führungsfläche zum partiellen Umgreifen eines Wälzkörpers in dessen Umfangsrichtung auf. Die ersten Führungsflächen und die zweiten Führungsflächen auf den Taschenseiten der Verbindungsstege, die an dieselbe Tasche angrenzen, sichern einen in dieser Tasche angeordneten Wälzkörper gegen Herausfallen in einer ersten Richtung und in einer zur ersten Richtung entgegengesetzten zweiten Richtung formschlüssig und fixieren dadurch den Wälzkörper verliersicher in der Tasche, wobei die ersten Führungsflächen einen größeren Umfangsbereich eines Wälzkörpers umgreifen als die zweiten Führungsflächen. Die Käfigsegmente sind wälzkörpergeführt. Durch die verliersichere Fixierung der Wälzkörper wird die Montage des Kegelrollenlagers erheblich erleichtert.
Die ersten Führungsflächen und die zweiten Führungsflächen können für einen Gleitkontakt mit dem Wälzkörper ausgebildet sein. Die ersten Führungsflächen können den Wälzkörper gegen Herausfallen in die erste Richtung sichern. Insbesondere können die ersten Führungsflächen den Wälzkörper ausschließlich gegen Herausfallen in die erste Richtung sichern. In analoger Weise können die zweiten Führungsflächen den Wälzkörper gegen Herausfallen in die zweite Richtung, insbesondere ausschließlich in die zweite Richtung, sichern. Die ersten Führungsflächen können jeweils einen größeren Umfangsbereich des Wälzkörpers umgreifen als die zweiten Führungsflächen. Außerdem können die ersten Führungsflächen auf den Taschenseiten der Verbindungsstege jeweils weiter in die Taschen hineinragen als die zweiten Führungsflächen. Es besteht auch die Möglichkeit, auf den Umgebungsseiten der Verbindungsstege zweite Führungsflächen auszubilden. Die ersten Führungsflächen können sich auf den Umgebungsseiten der Verbindungsstege über einen Großteil, insbesondere über wenigstens 90 %, der Länge der Verbindungsstege erstrecken. Ebenso besteht aber auch die Möglichkeit, auf den Umgebungsseiten der Verbindungsstege zweite Führungsflächen auszubilden.

Die Umfangsstege können unterschiedliche Längen aufweisen. Dabei können die ersten Führungsflächen jeweils näher am längeren Umfangssteg angeordnet sein als die zweiten Führungsflächen und die zweiten Führungsflächen jeweils näher am kürzeren Umfangssteg angeordnet sein als die ersten Führungsflächen.

Die Umfangsstege und die Verbindungsstege können jeweils innere Laufbahnseiten, die zu einer inneren Wälzkörperlaufbahn des Kegelrollenlagers hinweisen und äußere Laufbahnseiten, die zu einer äußeren Wälzkörperlaufbahn des Kegelrollenlagers hinweisen, aufweisen. Die inneren Laufbahnseiten und/oder die äußeren Laufbahnseiten der Umfangsstege, können jeweils im Bereich derselben Tasche als ebene Flächen ausgebildet sein. Die inneren Laufbahnseiten und/oder die äußeren Laufbahnseiten der Verbindungsstege können als ebene Flächen ausgebildet sein. Die inneren Laufbahnseiten aller Umfangsstege und derjenigen Verbindungsstege, welche dieselbe Tasche begrenzen, können jeweils eine Teilfläche aufweisen, die als ein Bestandteil einer gemeinsamen Ebene ausgebildet ist. Die äußeren Laufbahnseiten aller Umfangsstege und derjenigen Verbindungsstege, welche dieselbe Tasche begrenzen, können jeweils eine Teilfläche aufweisen, die als ein Bestandteil einer gemeinsamen Ebene ausgebildet ist.

Die Käfigsegmente können je genau eine Tasche aufweisen. Ein derart ausgebildetes Käfigsegment zeichnet sich durch eine besonders hohe mechanische Stabilität und eine sehr universelle Einsetzbarkeit aus.

Die Verbindungsstege können jeweils einen Hohlraum aufweisen. Der Hohlraum kann zur Umgebung hin offen ausgebildet sein. Außerdem kann der Hohlraum jeweils im Bereich zwischen den ersten Führungsflächen desselben Verbindungsstegs angeordnet sein. Durch den Hohlraum kann die maximal auftretende Materialdicke und somit auch die Variation der Materialdicke reduziert werden.

Die Käfigsegmente können jeweils aus Kunststoff gefertigt sein. Ein derart ausgebildetes Käfigsegment zeichnet sich insbesondere durch sein geringes Gewicht, seine kostengünstige Herstellung und vergleichsweise hohe Flexibilität aus. Insbesondere können die Käfigsegmente jeweils aus Poly-Phenyl-Sulfid oder aus Poly-Ether-Ether-Keton gefertigt sein. Beide Materialien zeichnen sich durch eine sehr gute Alterungsbeständigkeit und eine hohe Lebensdauer aus, so dass das Käfigsegment über einen sehr langen Betriebszeitraum eingesetzt werden kann.

Die ersten Führungsflächen auf den Umgebungsseiten der Verbindungsstege können zu den ersten Führungsflächen auf den Taschenseiten der Verbindungsstege bezüglich Form und Anordnung in analoger Weise ausgebildet sein. Die ersten Führungsflächen auf den Umgebungsseiten der Verbindungsstege können zu den ersten Führungsflächen auf den Taschenseiten der Verbindungsstege versetzt angeordnet sein. Insbesondere können die ersten Führungsflächen auf den Umgebungsseiten der Verbindungsstege zu den ersten Führungsflächen auf den Taschenseiten der Verbindungsstege zur inneren Wälzkörperlaufbahn des Kegelrollenlagers hin versetzt sein.

Sämtliche Verbindungsstege können auf ihren Taschenseiten identisch ausgebildet sein.

Die Umfangsstege können jeweils an einem der Verbindungsstege beginnen und an einem der Verbindungsstege enden.

Die erste Führungsfläche und die zweite Führungsfläche können auf der Taschenseite desselben Verbindungsstegs einen in der Tasche angeordneten Wälzkörper in unterschiedlichen Umfangsbereichen und/oder in unterschiedlichen Axialbereichen umgreifen. Die Umfangsbereiche können miteinander um weniger als 5 %, insbesondere weniger als 1 %, des maximalen Gesamtumfangs des Wälzkörpers und/oder die Axialbereiche miteinander um weniger als 50 %, insbesondere weniger als 10 %, der Länge des Verbindungsstegs überlappen. Insbesondere können die Umfangsbereiche nicht miteinander überlappen und/oder die Axialbereiche nicht miteinander überlappen.
Auf den Verbindungsstegen können erste Vorsprünge zur Abstützung des Käfigsegments auf einer inneren Wälzkörperlaufbahn des Kegelrollenlagers und/oder zweite Vorsprünge zur Abstützung des Käfigsegments auf einer äußeren Wälzkörperlaufbahn des Kegelrollenlagers ausgebildet sein. Die Abstützung erfolgt insbesondere jeweils lediglich zeitweise. Beispielsweise kann eine Abstützung bei einer großen, impulsartig auftretenden Last oder beim Stillstand des Kegelrollenlagers erfolgen. Dadurch können das Anlaufverhalten und die Notlaufeigenschaften wesentlich verbessert werden.
Die Käfigsegmente können jeweils so ausgebildet sein, dass sich ein erster Bereich, innerhalb dessen sich die ersten Vorsprünge zwischen den beiden Umfangsstegen erstrecken und ein zweiter Bereich, innerhalb dessen sich die zweiten Vorsprünge zwischen den beiden Umfangsstegen erstrecken, nicht miteinander überlappen.
Die Käfigsegmente können jeweils eine Markierung zur eindeutigen Kennzeichnung der Einbaulage aufweisen. Dies erleichtert den lagerichtigen Einbau der Käfigsegmente in das Kegelrollenlager. Eine Ausführung nicht gemäß der Erfindung bezieht sich weiterhin auf ein Kegelrollenlager zur drehbaren Lagerung eines ersten Maschinenteils relativ zu einem zweiten Maschinenteil. Das Kegelrollenlager weist konische Wälzkörper auf, die jeweils über eine Rotationsachse verfügen. Weiterhin weist das Kegelrollenlager Käfigsegmente auf, die je wenigstens einen Wälzkörper aufnehmen und die jeweils ein erstes Umfangsende und ein zweites Umfangsende aufweisen. Die Rotationsachsen sämtlicher Wälzkörper sind auf einer gemeinsamen konischen Fläche angeordnet. Die Käfigsegmente sind in Umfangsrichtung des Kegelrollenlagers derart aneinander gereiht, dass zwischen je zwei Käfigsegmenten jeweils ein Wälzkörper angeordnet ist, der nicht in einem Käfigsegment aufgenommen ist und der einen berührenden Kontakt dieser zwei Käfigsegmente miteinander dauerhaft verhindert. Die Käfigsegmente sind wälzkörpergeführt.

Ein derart ausgebildetes Kegelrollenlager zeichnet sich durch gute Laufeigenschaften und eine lange Lebensdauer aus. Wälzkörpergeführte Käfigsegmente haben den Vorteil, dass eine sehr präzise und verschleißarme Führung möglich ist.

Die Käfigsegmente können im Bereich ihres ersten Umfangsendes und ihres zweiten Umfangsendes jeweils eine konkav geformte erste Führungsfläche aufweisen, die den zwischen den Käfigsegmenten angeordneten Wälzkörper in dessen Umfangsrichtung partiell umgreift.

Die einzelnen Käfigsegmente sind untereinander vorzugsweise nicht mechanisch verbunden. Dies hat den Vorteil, dass die Käfigsegmente relativ zueinander verschiebbar sind, so dass eine Verformung und eine dabei auftretende erhöhte Reibung sowie ein erhöhter Verschleiß vermieden werden können.

Die Erfindung wird nachstehend anhand des in der Zeichnung dargestellten Ausführungsbeispiels erläutert.

Es zeigen:
- Figur 1: ein Ausführungsbeispiel eines erfindungsgemäß ausgebildeten Kegelrollenlagers in perspektivischer Darstellung,
- Figur 2: ein Ausführungsbeispiel des Käfigsegments in einer perspektivischen Darstellung,
- Figur 3: das in Figur 2 dargestellte Ausführungsbeispiel des Käfigsegments in Schnittdarstellung,
- Figur 4: das in Figur 2 dargestellte Ausführungsbeispiel des Käfigsegments in einer weiteren Schnittdarstellung,
- Figur 5: eine Anordnung aus Wälzkörpern und gemäß den Figuren 2 bis 4 ausgebildeten Käfigsegmenten in perspektivischer Darstellung und
- Figur 6: die in Figur 5 dargestellte Anordnung in einer weiteren perspektivischen Darstellung.

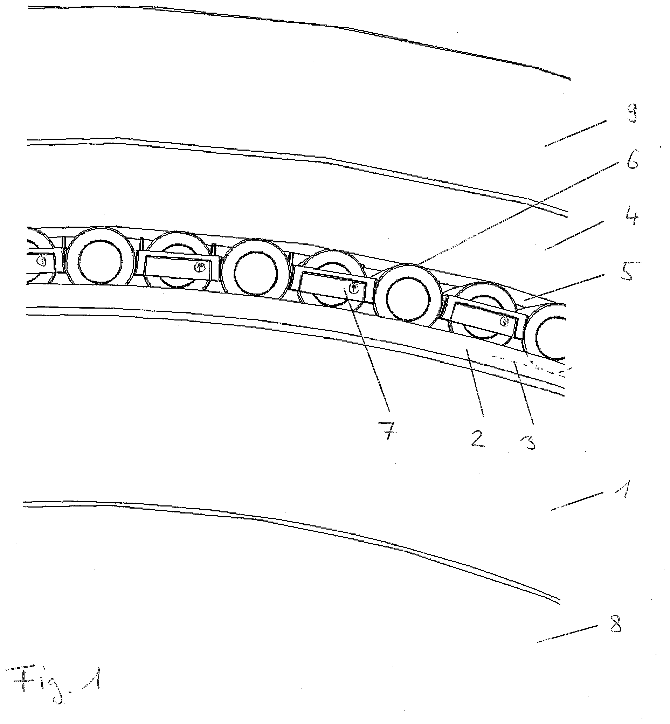

Figur 1 zeigt ein Ausführungsbeispiel eines erfindungsgemäß ausgebildeten Kegelrollenlagers in perspektivischer Darstellung.

Das Kegelrollenlager weist einen Innenring 1 mit einem Anlaufbord 2 und einer konischen inneren Wälzkörperlaufbahn 3 auf. In der Darstellung der Figur 1 ist die innere Wälzkörperlaufbahn 3 durch den Anlaufbord 2 verdeckt. Weiterhin weist das Kegelrollenlager einen Außenring 4 mit einer konischen äußeren Wälzkörperlaufbahn 5 auf. Außerdem weist das Kegelrollenlager einen Satz von konischen Wälzkörpern 6 auf, die auf der inneren Wälzkörperlaufbahn 3 und auf der äußeren Wälzkörperlaufbahn 5 abrollen. Dabei rotieren die Wälzkörper 6 um ihre nicht figürlich dargestellten Rotationsachsen, bzgl. denen die Wälzkörper 6 rotationssymmetrisch ausgebildet sind. Außerdem laufen die Wälzkörper 6 bezogen auf ihre Rotationsachsen axial am Anlaufbord 2 an. Das Kegelrollenlager weist zudem mehrere Käfigsegmente 7 auf, die beim dargestellten Ausführungsbeispiel jeweils einen Wälzkörper 6 enthalten.

Allerdings ist nur jeder zweite Wälzköper 6 in einem Käfigsegment 7 angeordnet, so dass in Umfangsrichtung des Kegelrollenlagers jeweils ein Käfigsegment 7 mit einem Wälzkörper 6 und ein Wälzkörper 6 ohne Käfigsegment 7 alternierend aufeinander folgen. Jeweils in Umfangsrichtung aufeinander folgende Käfigsegmente 7 werden durch einen Wälzkörper 6 dauerhaft auf Abstand zueinander gehalten. Dies bedeutet, dass sich die Käfigsegmente 7 unabhängig vom jeweiligen Betriebszustand des Kegelrollenlagers nicht gegenseitig berühren.

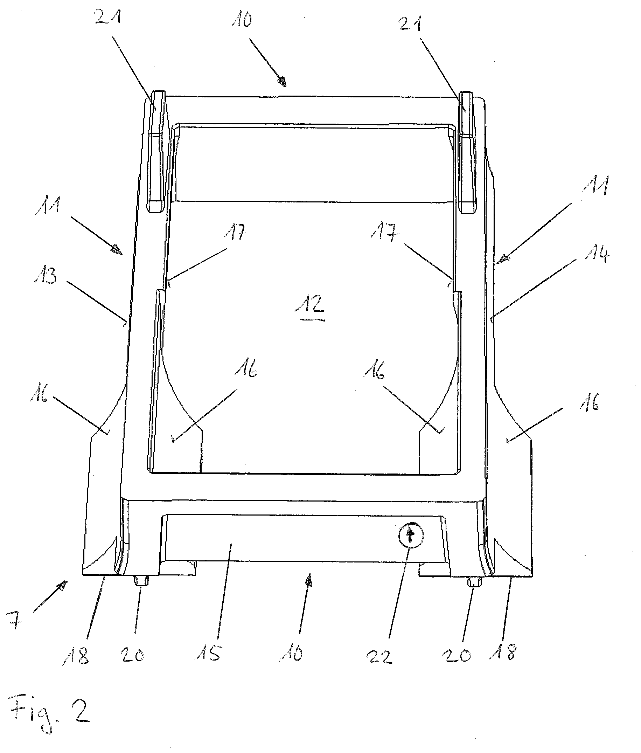

Die Käfigsegmente 7 sind wälzkörpergeführt, d. h. sie stützen sich auf den Wälzkörpern 6 ab. In den meisten Betriebssituationen des Kegelrollenlagers sind die Käfigsegmente 7 sogar ausschließlich wälzkörpergeführt, d. h. es kommt nicht zu einem berührenden Kontakt zwischen den Käfigsegmenten 7 und den inneren Wälzkörperlaufbahnen 3 oder den äußeren Wälzkörperlaufbahnen 5 oder sonstigen Bestandteilen des Innenrings 1 oder des Außenrings 4. Details zur Ausbildung der Käfigsegmente 7 werden anhand der Figuren 2, 3, 4, 5 und 6 erläutert.

Beim dargestellten Ausführungsbeispiel ist der Innenring 1 auf einer Welle 8 angeordnet. Bei der Welle 8 kann es sich insbesondere um eine Rotorwelle einer Windkraftanlage handeln. Der Außenring 4 ist in einem Gehäuse 9 angeordnet, das insbesondere Bestandteil einer Rotorlagerung einer Windkraftanlage sein kann.

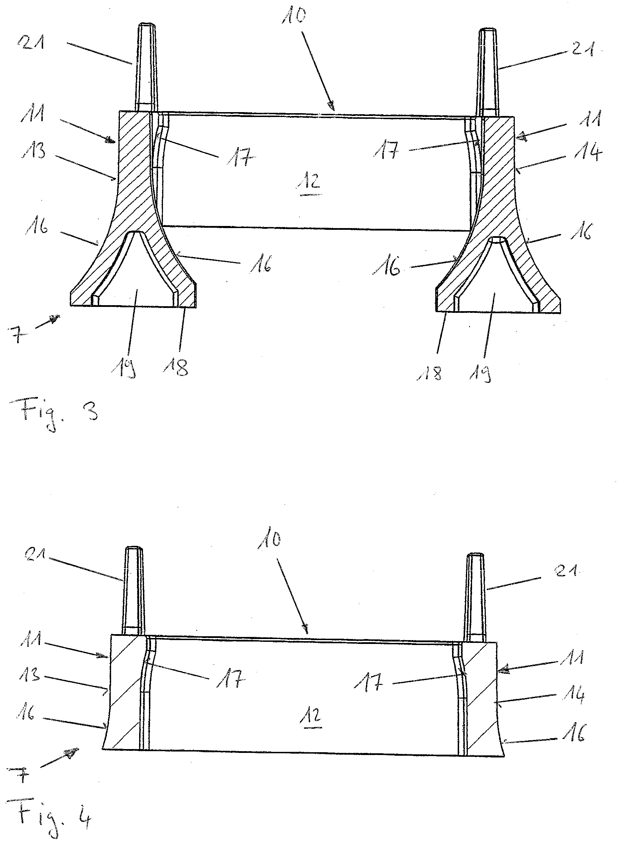

Figur 2 zeigt ein Ausführungsbeispiel des Käfigsegments 7 in einer perspektivischen Darstellung. Figur 3 und Figur 4 zeigen das in Figur 2 dargestellte Ausführungsbeispiel jeweils in Schnittdarstellung bzgl. verschiedener Schnittebenen. Die Darstellung ist in den Figuren 2 bis 4 jeweils so gewählt, dass die innere Wälzkörperlaufbahn 3 unterhalb des Käfigsegments 7 und die äußere Wälzkörperlaufbahn 5 oberhalb des Käfigsegments 7 verlaufen würden, wenn das Käfigsegment 7 in dem dargestellten Zustand in das Kegelrollenlager eingebaut wäre.

Das Käfigsegment 7 weist zwei in einem Abstand zueinander angeordnete und parallel zueinander orientierte Umfangsstege 10 auf, die im eingebauten Zustand des Käfigsegments 7 in Umfangsrichtung des Kegelrollenlagers verlaufen.

Weiterhin weist das Käfigsegment 7 zwei in einem Abstand zueinander angeordnete Verbindungsstege 11 auf, die einen von Null verschiedenen Winkel miteinander einschließen und die beiden Umfangsstege 10 miteinander verbinden. Auf diese Weise wird eine Tasche 12 zur Aufnahme eines Wälzkörpers 6 ausgebildet. Infolge des nicht parallelen Verlaufs der Verbindungsstege 11 weisen die beiden Umfangstege 10 eine unterschiedliche Länge auf und die Tasche 12 weist die Form eines gleichschenkligen Trapezes auf. Als Länge der Umfangsstege 10 wird das Außenmaß der Umfangsstege 10 von einem ersten Umfangsende 13 bis zu einem zweiten Umfangsende 14 des Käfigsegments 7 angesehen. Falls das erste Umfangsende 13 und das zweite Umfangsende 14 der Umfangsstege 10 jeweils nicht parallel zueinander orientiert sind, kann jeweils der arithmetische Mittelwert des Außenmaßes herangezogen werden. In Figur 2 ist der im Vordergrund dargestellte Umfangssteg 10 länger als der im Hintergrund dargestellte Umfangssteg 10.

Die Seiten der Umfangsstege 10 und der Verbindungsstege 11, welche die Tasche 12 begrenzen, werden im Folgenden auch als Taschenseiten bezeichnet. In analoger Weise werden die zu den Taschenseiten entgegengesetzten Seiten der Umfangsstege 10 und Verbindungsstege 11 im Folgenden auch als Umgebungsseiten bezeichnet, soweit diese nicht eine weitere Tasche 12 begrenzen. Bei den Umfangsstegen 10 ist diese Bedingung generell erfüllt, es sei denn, es handelt sich um ein mehrreihiges Käfigsegment 7, bei dem mehrere Wälzkörper 6 axial hintereinander angeordnet sind. Bei den Verbindungsstegen 11 ist diese Bedingung jeweils dann erfüllt, wenn der jeweilige Verbindungssteg 11 im Bereich des ersten Umfangsendes 13 oder des zweiten Umfangsendes 14 des Käfigsegments 7 angeordnet ist, d. h. für den ersten Verbindungssteg 11 und den letzen Verbindungssteg 11 des Käfigsegments 7 bezogen auf die Umfangsrichtung des Kegelrollenlagers. Da das in den Figuren 2 bis 4 dargestellte Ausführungsbeispiel des Käfigsegments 7 nur eine einzige Tasche 12 aufweist, verfügt jeder Umfangssteg 10 und jeder Verbindungssteg 11 bei diesem Ausführungsbeispiel jeweils über eine Taschenseite und eine Umgebungsseite.

Wie bereits erwähnt, verfügen die Umfangsstege 10 eines einreihigen Käfigsegments 7 auch dann über jeweils eine Taschenseite und eine Umgebungsseite, wenn das Käfigsegment 7 mehr als eine Tasche 12 aufweist. Demgegenüber können die Verbindungsstege 11 in einem solchen Fall jeweils entweder eine oder zwei Taschenseiten und somit entweder eine oder keine Umgebungsseite aufweisen. Ein Verbindungssteg 11 der zwischen zwei Taschen 12 angeordnet ist weist zwei Taschenseiten und keine Umgebungsseite auf. Ein in Umfangsrichtung endständiger Verbindungssteg 11, der lediglich eine einzige Tasche 12 begrenzt weist eine Taschenseite und eine Umgebungsseite auf.

Neben der Taschenseite und ggf. der Umgebungsseite weisen die Umfangsstege 10 und die Verbindungsstege 11 jeweils eine innere Laufbahnseite, die im eingebauten Zustand der inneren Wälzkörperlaufbahn 3 des Kegelrollenlagers zugewandt ist und eine äußere Laufbahnseite, die im eingebauten Zustand der äußeren Wälzkörperlaufbahn 5 des Kegelrollenlagers zugewandt ist, auf. In den Figuren 2 bis 4 entspricht die innere Laufbahnseite jeweils der Unterseite und die äußere Laufbahnseite jeweils der Oberseite der Umfangsstege 10 und der Verbindungsstege 11.

Bei dem in den Figuren 2 bis 4 dargestellten Ausführungsbeispiel des Käfigsegments 7 sind die inneren Laufbahnseiten und die äußeren Laufbahnseiten der Umfangsstege 10 und der Verbindungsstege 11 jeweils als eine ebene Fläche ausgebildet. Außerdem weisen sämtliche innere Laufbahnseiten der Umfangsstege 10 und der Verbindungsstege 11 jeweils eine Teilfläche auf, die als ein Bestandteil einer gemeinsamen Ebene ausgebildet ist. Ebenso weisen sämtliche äußere Laufbahnseiten der Umfangsstege 10 und der Verbindungsstege 11 jeweils eine Teilfläche auf, die als ein Bestandteil einer gemeinsamen Ebene ausgebildet ist. Bei Ausführungsbeispielen, bei denen das Käfigsegment 7 mehrere Taschen 12 aufweist, gilt dies zumindest jeweils für die inneren Laufbahnseiten und die äußeren Laufbahnseiten der Umfangsstege 10 und derjenigen Verbindungsstege 11, welche dieselbe Tasche 12 begrenzen.

Die Umfangsstege 10 sind insbesondere einteilig mit den Verbindungsstegen 11 ausgebildet. Diese einteilige Ausbildung kann beispielsweise durch eine Fertigung des Käfigsegments 7 als ein Kunststoff-Spritzgussteil erreicht werden. Außerdem schließen die Umfangsstege 10 und die Verbindungsstege 11 im Bereich des ersten Umfangsendes 13 und des zweiten Umfangsendes 14 mit ihren Umgebungsseiten bündig miteinander ab, d. h. es stehen weder die Umfangsstege 10 über die Verbindungsstege 11 noch die Verbindungsstege 11 über die Umfangsstege 10 nach außen über.

Die Umfangsstege 10 weisen auf ihren Umgebungsseiten jeweils eine großflächige Vertiefung 15 auf, die sich über den größten Teil der Umgebungsseiten erstreckt und an drei Seiten U-förmig eingerahmt ist. Zur unteren Laufbahnseite der Umfangsstege 10 hin ist die Vertiefung 15 jeweils offen. Abgesehen von der Vertiefung 15 weisen die Umfangsstege 10 jeweils einen im Wesentlichen rechteckigen Querschnitt auf.

Die Verbindungsstege 11 weisen sowohl auf ihren Taschenseiten als auch auf ihren Umgebungsseiten jeweils eine erste Führungsfläche 16 zur gleitenden Führung des Käfigsegments 7 auf einem innerhalb des Käfigsegments 7 angeordneten Wälzkörper 6 und auf zwei beidseits unmittelbar neben dem Käfigsegment 7 angeordneten Wälzkörpern 6 auf. Weiterhin weisen die Verbindungsstege 11 auf ihren Taschenseiten eine zweite Führungsfläche 17 zur gleitenden Führung des Käfigsegments 7 auf dem innerhalb des Käfigsegments 7 angeordneten Wälzkörper 6 auf. Zur ersten Führungsfläche 16 und zur zweiten Führungsfläche 17 werden jeweils nur Bereiche gerechnet, die im Betriebszustand des Kegelrollenlagers ohne eine Verformung des Käfigsegments 7 die Mantelfläche eines Wälzkörpers 6 berühren können. Die erst Führungsfläche 16 und die zweite Führungsfläche 17 erstrecken sich jeweils nicht über die gesamte Länge der Verbindungsstege 11, sondern lediglich über einen Teilbereich, beispielsweise über maximal die Hälfte der Länge der Verbindungsstege 11. Als Länge der Verbindungsstege 11 wird die gesamte Erstreckung der Verbindungsstege 11 zwischen den Umfangsstegen 10 angesehen. Dabei ist die zweite Führungsfläche 17 jeweils derart neben der ersten Führungsfläche 16 angeordnet, dass die erste Führungsfläche 16 und die zweite Führungsfläche 17 entlang der Längsrichtung des Verbindungsstegs 11 nicht oder nur geringfügig miteinander überlappen. Mit anderen Worten, die erste Führungsfläche 16 und die zweite Führungsfläche 17 sind in Axialbereichen eines im Käfigsegment 7 angeordneten Wälzkörpers 6 ausgebildet, die nicht oder nur partiell, insbesondere nur geringfügig, miteinander überlappen. Beispielsweise überlappen die erste Führungsfläche 16 und die zweite Führungsfläche 17 um weniger als 50 %, insbesondere um weniger als 10% der Länge des Verbindungsstegs 11. Die erste Führungsfläche 16 ist angrenzend an den längeren Umfangssteg 10 oder in dessen Nähe, die zweite Führungsfläche 17 angrenzend an den kürzeren Umfangssteg 10 oder in dessen Nähe angeordnet. Mit anderen Worten, die erste Führungsfläche 16 ist näher am längeren Umfangssteg 10 angeordnet als die zweite Führungsfläche 17 und die zweite Führungsfläche 17 ist näher am kürzeren Umfangssteg 10 angeordnet als die erste Führungsfläche 16.

Die ersten Führungsflächen 16 sind auf der Taschenseite und auf der Umgebungsseite des Verbindungsstegs 11 hinsichtlich Anordnung und Formgebung in analoger Weise ausgebildet. Unter einer analogen Ausbildung ist eine qualitativ, nicht notwendiger Weise aber quantitativ gleiche Ausbildung zu verstehen. Beispielsweise ist die erste Führungsfläche 16 auf der Umgebungsseite des Verbindungsstegs 11 geringfügig zur ersten Führungsfläche 16 auf der Taschenseite desselben Verbindungsstegs 11 verschoben. Dies hat günstigere Führungsverhältnisse im Hinblick auf den durch die Krümmung der inneren Wälzkörperlaufbahn 3 und der äußeren Wälzkörperlaufbahn 5 erforderlichen Versatz zwischen benachbarten Wälzkörpern 6 zur Folge. Eine analoge Formgebung der ersten Führungsflächen 16 bedeutet, dass der qualitative Verlauf der Krümmung der ersten Führungsflächen 16, nicht notwendiger Weise jedoch deren Krümmungsradien übereinstimmen. Allerdings sind beim dargestellten Ausführungsbeispiel identische Krümmungsradien vorgesehen und auch in vielen anderen Fällen sinnvoll. Die ersten Führungsflächen 16 und die zweiten Führungsflächen 17 weisen jeweils eine konkave Form auf, so dass sie einen in der Tasche 12 des Käfigsegments 7 angeordneten Wälzkörper 6 sowie im Falle der ersten Führungsflächen 16 beidseits unmittelbar neben dem Käfigsegment 7 angeordnete Wälzkörper 6 in deren Umfangsrichtung jeweils bereichsweise umschließen.

Außerdem sind die ersten Führungsflächen 16 und die zweiten Führungsflächen 17 jeweils derart versetzt zueinander angeordnet, dass sie einen in der Tasche 12 angeordneten Wälzkörper 6 in unterschiedlichen Umfangsbereichen führen, bzw. bei umgekehrter Betrachtungsweise sich auf unterschiedliche Umfangsbereiche des Wälzkörpers 6 abstützen. Insbesondere kann vorgesehen sein, dass diese unterschiedlichen Umfangsbereiche nicht oder nur geringfügig miteinander überlappen. Beispielsweise können die Umfangsbereiche um weniger als 5 % oder um weniger als 1 % des maximalen Gesamtumfangs des Wälzkörpers 6 überlappen. Beim dargestellten Ausführungsbeispiel stehen die ersten Führungsflächen 16 mit zunehmender Annäherung an die innere Laufbahnseite und darüber hinaus zunehmend vor und die zweiten Führungsflächen 17 mit zunehmender Annäherung an die äußere Laufbahnseite zunehmend vor. Demgemäß ragen die auf den Taschenseiten der Verbindungsstege 11 ausgebildeten ersten Führungsflächen 16 und zweiten Führungsflächen 17 beim Fortschreiten in den genannten Richtungen zunehmend in den Bereich der Tasche 12 hinein. Dies bedeutet, dass ein in die Tasche 12 eingesetzter Wälzkörper 6 durch die ersten Führungsflächen 16 zur inneren Laufbahnseite hin und durch die zweiten Führungsflächen 17 zur äußeren Laufbahnseite hin gegen Herausfallen aus der Tasche 12 gesichert ist. Somit ist der Wälzkörper 6 zu allen Seiten hin gegen Herausfallen gesichert und demgemäß verliersicher in der Tasche 12 des Käfigsegments 7 angeordnet.

Wie aus den Figuren 2 und 3 ersichtlich ist die erste Führungsfläche 16 jeweils deutlich stärker ausgeprägt als die zweite Führungsfläche 17. Um diese starke Ausprägung der ersten Führungsfläche 16 zu ermöglichen, ist am Verbindungssteg 11 ein Stegfortsatz 18 ausgebildet, der über die innere Laufbahnseite übersteht und sich mit zunehmender Entfernung von der inneren Laufbahnseite progressiv verdickt. Der Stegfortsatz 18 weist einen Hohlraum 19 auf, der zum freien Ende des Stegfortsatzes 18 hin offen ist. Durch den Hohlraum 19 wird die Materialdicke des Stegfortsatzes 18 reduziert und der Materialdicke in anderen Bereichen des Käfigsegments 7 angenähert.

Weiterhin ist im Bereich des freien Endes des Stegfortsatzes 18 ein erster Vorsprung 20 ausgebildet, der über die Endfläche des Stegfortsatzes 18 übersteht. Ein zweiter Vorsprung 21 ist auf der Laufbahnseite des Verbindungsstegs 11 in dem Bereich angeordnet, in dem der zweite Führungsbereich 16 ausgebildet ist. Im eingebauten Zustand des Käfigsegments 7 erstreckt sich der erste Vorsprung 20 in Richtung der inneren Wälzkörperlaufbahn 3, berührt diese aber nicht, wenn das Kegelrollenlager unter Normalbedingungen rotiert. In analoger Weise erstreckt sich der zweite Vorsprung 21 in Richtung der äußeren Wälzkörperlaufbahn 5, berührt diese aber nicht, wenn das Kegelrollenlager unter Normalbedingungen rotiert. Wenn das Kegelrollenlager einer starken impulsförmigen Belastung ausgesetzt ist, kann es dagegen zu einer Berührung zwischen dem ersten Vorsprung 20 und der inneren Wälzkörperlaufbahn 3 oder zwischen dem zweiten Vorsprung 21 und der äußeren Wälzkörperlaufbahn 5 kommen. Gleiches gilt auch, falls das Kegelrollenlager nicht rotiert.

Um den lagerichtigen Einbau in das Kegelrollenlager zu erleichtern weist das Käfigsegment 7 im Bereich der Vertiefung 15 eine Markierung 22 auf.

Alternativ zu dem in den Figuren 2 bis 4 dargestellten Ausführungsbeispiel kann das Käfigsegment 7 auch mehr als eine Tasche 12 aufweisen und demgemäß mehrere Wälzkörper 6 aufnehmen. Beispielsweise kann das Käfigsegment 7 bei einem alternativen Ausführungsbeispiel zwei Taschen 12 aufweisen, die zwei Wälzkörper 6 aufnehmen. Die beiden Taschen 12 werden durch zwei Umfangsstege 10 und drei Verbindungsstege 11 ausgebildet. Zwei der Verbindungsstege 11, die im Bereich des ersten Umfangsendes 13 bzw. im Bereich des zweiten Umfangsendes 14 des Käfigsegments 7 ausgebildet sind, weisen jeweils eine Taschenseite und eine Umgebungsseite auf. Der dritte Verbindungssteg 11, der zwischen den endständigen Verbindungsstegen 11 angeordnet ist weist zwei Taschenseiten und dafür keine Umgebungsseite auf.

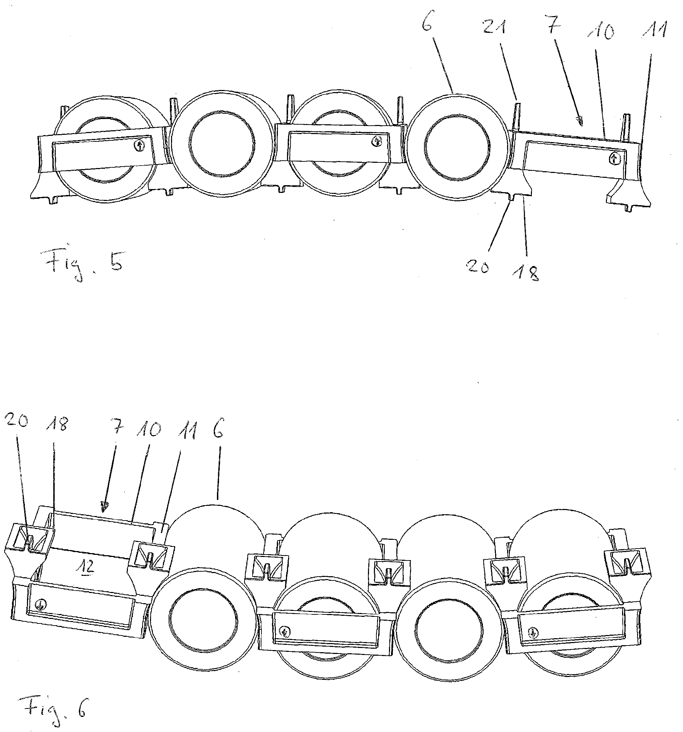

Figur 5 zeigt eine Anordnung aus Wälzkörpern 6 und gemäß den Figuren 2 bis 4 ausgebildeten Käfigsegmenten 7 in perspektivischer Darstellung. Figur 6 zeigt dieselbe Anordnung unter einer anderen Perspektive. Die dargestellte Anordnung entspricht der Einbausituation im Kegelrollenlager. Demgemäß sind jeweils ein Käfigsegment 7 mit einem Wälzkörper 6 und ein Wälzkörper 6 ohne Käfigsegment 7 in abwechselnder Aufeinanderfolge nebeneinander angeordnet. Da die Wälzkörper 6 die Käfigsegmente 7 jeweils teilweise verdecken, ist jeweils ein Käfigsegment 7 ohne Wälzkörper 6 dargestellt. Tatsächlich weisen im eingebauten Zustand aber alle Käfigsegmente 7 einen Wälzkörper 6 auf.

Die Umfangsstege 10 verschiedener Käfigsegmente 7 schließen jeweils einen Winkel miteinander ein. Insbesondere schließen die inneren Laufbahnseiten der Umfangsstege 10 verschiedener Käfigsegmente 7 jeweils einen von Null verschiedenen Winkel miteinander ein. Ebenso schließen die äußeren Laufbahnseiten der Umfangsstege 10 verschiedener Käfigsegmente 7 jeweils einen von Null verschiedenen Winkel miteinander ein. Bei einem Ausführungsbeispiel des Käfigsegments 7, das mehrere Taschen 12 aufweist, besteht auch die Möglichkeit, dass die inneren Laufbahnseiten und/oder die äußeren Laufbahnseiten der Umfangsstege 10 jeweils eine Polygonform aufweisen und demgemäß Abschnitte der Laufbahnseiten, die im Bereich verschiedener Taschen 12 des Käfigsegments 7 angeordnet sind, einen von Null verschiedenen Winkel miteinander einschließen. Wie aus den Figuren 5 und 6 erkennbar ist, ermöglicht der leichte Versatz zwischen den ersten Führungsflächen 16 auf der Taschenseite und auf der Umgebungsseite desselben Verbindungsstegs 11 die Krümmung der inneren Wälzkörperlaufbahn 3 und der äußeren Wälzkörperlaufbahn 5 ohne gravierende Variation der Führungseigenschaften nachzubilden.

Außerdem ist die Geometrie der Käfigsegmente 7, insbesondere der ersten Führungsfläche 16 und der zweiten Führungsfläche 17 so auf die Wälzkörper 6 abgestimmt, dass die Käfigsegmente 7 im Rotationszustand des Kegelrollenlagers sich auf Wälzkörpern 6 abstützen und weder die innere Wälzkörperlaufbahn 3 noch die äußere Wälzkörperlaufbahn 5 berühren. Dies bedeutet, dass das Kegelrollenlager wälzkörpergeführt ist. Allerdings ist zwischen der inneren Wälzkörperlaufbahn 3 und den ersten Vorsprüngen 20 der Käfigsegmente 7 sowie zwischen der äußeren Wälzkörperlaufbahn 5 und den zweiten Vorsprüngen 21 der Käfigsegmente 7 jeweils lediglich ein geringer lichter Abstand ausgebildet, so dass es bei einer starken impulsförmigen Belastung oder bei einem Stillstand des Kegelrollenlagers zu einem berührenden Kontakt zwischen Käfigsegmenten 7 und der inneren Wälzkörperlaufbahn 3 oder der äußeren Wälzkörperlaufbahn 5 kommen kann. Dieser Kontakt wird im Bereich der ersten Vorsprünge 20 oder der zweiten Vorsprünge 21 der Käfigsegmente 7 ausgebildet, so dass sich die Käfigsegmente 7 in einer derartigen Situation mit den ersten Vorsprüngen 20 auf der inneren Wälzkörperlaufbahn 3 oder mit den zweiten Vorsprüngen 21 auf der äußeren Wälzkörperlaufbahn 5 abstützen. Wenn diese besondere Situation beendet ist, wird auch der berührende Kontakt der Käfigsegmente 7 mit der inneren Wälzkörperlaufbahn 3 oder mit der äußeren Wälzkörperlaufbahn 5 wieder aufgehoben und es findet wieder eine reine Wälzkörperführung statt. Dies bedeutet, dass den ersten Vorsprüngen 20 und den zweiten Vorsprüngen 21 eine Stützfunktion der Käfigsegmente 7 in Extremsituationen zukommt. Diese Stützfunktion kann auch bei einem übermäßigen Verschleiß der Käfigsegmente 7 vorgesehen sein, um die dann nicht mehr in ausreichendem Maß vorhandene Wälzkörperführung der Käfigsegmente 7 zu ersetzen.

### Bezugszeichen

- 1: Innenring
- 2: Anlaufbord
- 3: innere Wälzkörperlaufbahn
- 4: Außenring
- 5: äußere Wälzkörperlaufbahn
- 6: Wälzkörper
- 7: Käfigsegment
- 8: Welle
- 9: Gehäuse
- 10: Umfangssteg
- 11: Verbindungssteg
- 12: Tasche
- 13: erstes Umfangsende
- 14: zweites Umfangsende
- 15: Vertiefung
- 16: erste Führungsfläche
- 17: zweite Führungsfläche
- 18: Stegfortsatz
- 19: Hohlraum
- 20: erster Vorsprung
- 21: zweiter Vorsprung
- 22: Markierung

## Patentansprüche

1. Kegelrollenlager zur drehbaren Lagerung eines ersten Maschinenteils (8) relativ zu einem zweiten Maschinenteil (9), mit konischen Wälzkörpern (6) und Käfigsegmenten (7) mit je
- zwei einander gegenüber liegenden Umfangsstegen (10), die sich jeweils zwischen einem ersten Umfangsende (13) und einem zweiten Umfangsende (14) des Käfigsegments (7) erstrecken und
- wenigstens zwei einander gegenüberliegenden Verbindungsstegen (11), welche die beiden Umfangsstege (10) miteinander verbinden und gemeinsam mit den Umfangsstegen (10) wenigstens eine Tasche (12), die einen der konischen Wälzkörper aufnimmt, (6) ausbilden
wobei
- die Umfangsstege (10) und die Verbindungsstege (11) Taschenseiten aufweisen, welche die Tasche (12) begrenzen,
- die Umfangsstege (10) und die im Bereich des ersten Umfangsendes (13) und des zweiten Umfangsendes (14) angeordneten Verbindungsstege (11) zu den Taschenseiten entgegengesetzte Umgebungsseiten aufweisen, **dadurch gekennzeichnet, dass**
- die Verbindungsstege (11) jeweils auf ihrer Taschenseite eine konkav geformte erste Führungsfläche (16) und eine konkav geformte zweite Führungsfläche (17) und die im Bereich des ersten Umfangsendes (13) oder des zweiten Umfangsendes (14) angeordneten Verbindungsstege (11) zusätzlich jeweils auf ihrer Umfangsseite eine konkav geformte erste Führungsfläche (16) zum partiellen Umgreifen eines Wälzkörpers (6) in dessen Umfangsrichtung aufweisen,
- die ersten Führungsflächen (16) und die zweiten Führungsflächen (17) auf den Taschenseiten der Verbindungsstege (11), die an dieselbe Tasche (12) angrenzen, einen in dieser Tasche (12) angeordneten Wälzkörper (6) gegen Herausfallen in einer ersten Richtung und in einer zur ersten Richtung entgegengesetzten zweiten Richtung formschlüssig sichern und dadurch den Wälzkörper (6) verliersicher in der Tasche (12) fixieren, wobei die ersten Führungsflächen (16) einen größeren Umfangsbereich eines Wälzkörpers (6) umgreifen als die zweiten Führungsflächen (17) und
- die Käfigsegmente (7) wälzkörpergeführt sind.

2. Kegelrollenlager nach einem der vorhergehenden Ansprüche, wobei die ersten Führungsflächen (16) auf den Umgebungsseiten der Verbindungsstege (11) zu den ersten Führungsflächen (16) auf den Taschenseiten der Verbindungsstege (11) bezüglich Form und Anordnung in analoger Weise ausgebildet sind.

3. Kegelrollenlager nach einem der vorhergehenden Ansprüche, wobei sämtliche Verbindungsstege (11) auf ihren Taschenseiten identisch ausgebildet sind.

4. Kegelrollenlager nach einem der vorhergehenden Ansprüche, wobei die Umfangsstege (10) jeweils an einem der Verbindungsstege (11) beginnen und an einem der Verbindungsstege (11) enden.

5. Kegelrollenlager nach einem der vorhergehenden Ansprüche, wobei die erste Führungsfläche (16) und die zweite Führungsfläche (17) auf der Taschenseite desselben Verbindungsstegs (11) einen in der Tasche (12) angeordneten Wälzkörper (6) in unterschiedlichen Umfangsbereichen und/oder in unterschiedlichen Axialbereichen umgreifen.

6. Kegelrollenlager nach einem der vorhergehenden Ansprüche, wobei auf den Verbindungsstegen (11) erste Vorsprünge (20) zur Abstützung des Käfigsegments auf einer inneren Wälzkörperlaufbahn (3) des Kegelrollenlagers und/oder zweite Vorsprünge (21) zur Abstützung des Käfigsegments (7) auf einer äußeren Wälzkörperlaufbahn (5) des Kegelrollenlagers ausgebildet sind.

7. Kegelrollenlager nach Anspruch 6, wobei ein erster Bereich, innerhalb dessen sich die ersten Vorsprünge (20) zwischen den beiden Umfangsstegen (10) erstrecken und ein zweiter Bereich, innerhalb dessen sich die zweiten Vorsprünge (21) zwischen den beiden Umfangsstegen (10) erstrecken, nicht miteinander überlappen.

8. Kegelrollenlager nach einem der vorhergehenden Ansprüche, wobei das Käfigsegment (7) eine Markierung (22) zur eindeutigen Kennzeichnung der Einbaulage aufweist.

## Claims

1. Tapered roller bearing for mounting a first machine part (8) rotatably relative to a second machine part (9), having conical rolling bodies (6) and cage segments (7) with in each case
- two circumferential webs (10) which lie opposite one another and extend in each case between a first circumferential end (13) and a second circumferential end (14) of the cage segment (7), and
- at least two connecting webs (11) which lie opposite one another, connect the two circumferential webs (10) to one another and, together with the circumferential webs (10), configure at least one pocket (12) which receives one of the conical rolling bodies (6),
- the circumferential webs (10) and the connecting webs (11) having pocket sides which delimit the pocket (12),
- the circumferential webs (10) and the connecting webs (11) which are arranged in the region of the first circumferential end (13) and the second circumferential end (14) having opposed surrounding sides with respect to the pocket sides,
**characterized in that**,
- in each case on their pocket side, the connecting webs (11) have a concavely shaped first guide face (16) and a concavely shaped second guide face (17), and in each case on their circumferential side, the connecting webs (11) which are arranged in the region of the first circumferential end (13) or the second circumferential end (14) additionally have a concavely shaped first guide face (16) for partially engaging around a rolling body (6) in its circumferential direction,
- the first guide faces (16) and the second guide faces (17) on the pocket sides of the connecting webs (11) which adjoin the same pocket (12) secure a rolling body (6) which is arranged in the said pocket against falling out in a first direction and in a second direction which is opposed to the first direction in a positively locking manner and, as a result, fix the rolling body (6) captively in the pocket (12), the first guide faces (16) engaging around a greater circumferential region of a rolling body (6) than the second guide faces (17), and
- the cage segments (7) are guided by rolling bodies.

2. Tapered roller bearing according to one of the preceding claims, the first guide faces (16) on the surrounding sides of the connecting webs (11) being configured with regard to the shape and the arrangement in an analogous manner with respect to the first guide faces (16) on the pocket sides of the connecting webs (11) .

3. Tapered roller bearing according to either of the preceding claims, all of the connecting webs (11) being of identical configuration on their pocket sides.

4. Tapered roller bearing according to one of the preceding claims, the circumferential webs (10) beginning in each case at one of the connecting webs (11) and ending at one of the connecting webs (11).

5. Tapered roller bearing according to one of the preceding claims, the first guide face (16) and the second guide face (17) on the pocket side of the same connecting web (11) engaging around a rolling body (6) which is arranged in the pocket (12) in different circumferential regions and/or in different axial regions.

6. Tapered roller bearing according to one of the preceding claims, first projections (20) for supporting the cage segment on an inner rolling body raceway (3) of the tapered roller bearing and/or second projections (21) for supporting the cage segment (7) on an outer rolling body raceway (5) of the tapered roller bearing being configured on the connecting webs (11).

7. Tapered roller bearing according to Claim 6, a first region, within which the first projections (20) extend between the two circumferential webs (10), and a second region, within which the second projections (21) extend between the two circumferential webs (10), not overlapping with one another.

8. Tapered roller bearing according to one of the preceding claims, the cage segment (7) having a marking (22) for clear identification of the installation position.

## Revendications

1. Palier à rouleaux coniques pour le support rotatif d'une première pièce de machine (8) par rapport à une deuxième pièce de machine (9), comprenant des corps de roulement coniques (6) et des segments de cage (7) comprenant chacun
- deux nervures périphériques mutuellement opposées (10) qui s'étendent à chaque fois entre une première extrémité périphérique (13) et une deuxième extrémité périphérique (14) du segment de cage (7) et
- au moins deux nervures de liaison (11) mutuellement opposées qui relient l'une à l'autre les deux nervures périphériques (10) et qui constituent conjointement avec les nervures périphériques (10) au moins une cavité (12) qui reçoit l'un des corps de roulement coniques (6),
- les nervures périphériques (10) et les nervures de liaison (11) présentant des côtés orientés vers la cavité qui délimitent la cavité (12),
- les nervures périphériques (10) et les nervures de liaison (11) disposées dans la région de la première extrémité périphérique (13) et de la deuxième extrémité périphérique (14) présentant des côtés orientés vers l'environnement opposés aux côtés orientés vers la cavité,
**caractérisé en ce que**
- les nervures de liaison (11) présentent à chaque fois, sur leurs côtés orientés vers la cavité, une première surface de guidage de forme concave (16) et une deuxième surface de guidage de forme concave (17) et les nervures de liaison (11) disposées dans la région de la première extrémité périphérique (13) ou de la deuxième extrémité périphérique (14) présentent en outre à chaque fois sur leurs côtés périphériques une première surface de guidage de forme concave (16) destinée à venir en prise en partie autour d'un corps de roulement (6) dans sa direction périphérique,
- les premières surfaces de guidage (16) et les deuxièmes surfaces de guidage (17), sur les côtés orientés vers la cavité des nervures de liaison (11) qui sont adjacents à la même cavité (12), fixent par engagement par correspondance de formes un corps de roulement (6) disposé dans cette cavité (12) pour l'empêcher de tomber dans une première direction et une deuxième direction opposée à la première direction et de ce fait fixent le corps de roulement (6) de manière imperdable dans la cavité (12), les premières surfaces de guidage (16) venant en prise autour d'une plus grande région périphérique d'un corps de roulement (6) que les deuxièmes surfaces de guidage (17) et
- les segments de cage (7) étant guidés par les corps de roulement.

2. Palier à rouleaux coniques selon l'une quelconque des revendications précédentes, dans lequel les premières surfaces de guidage (16) sur les côtés orientés vers l'environnement des nervures de liaison (11) sont réalisées en termes de forme et d'agencement, de manière analogue aux premières surfaces de guidage (16) sur les côtés orientés vers la cavité des nervures de liaison (11).

3. Palier à rouleaux coniques selon l'une quelconque des revendications précédentes, dans lequel toutes les nervures de liaison (11) sont réalisées de manière identique sur leurs côtés orientés vers la cavité.

4. Palier à rouleaux coniques selon l'une quelconque des revendications précédentes, dans lequel les nervures périphériques (10) commencent à chaque fois au niveau de l'une des nervures de liaison (11) et se terminent au niveau de l'une des nervures de liaison (11).

5. Palier à rouleaux coniques selon l'une quelconque des revendications précédentes, dans lequel la première surface de guidage (16) et la deuxième surface de guidage (17) sur le côté orienté vers la cavité de la même nervure de liaison (11) viennent en prise autour d'un corps de roulement (6) disposé dans la cavité (12) dans des régions périphériques différentes et/ou dans des régions axiales différentes.

6. Palier à rouleaux coniques selon l'une quelconque des revendications précédentes, dans lequel, sur les nervures de liaison (11) sont réalisées des premières saillies (20) pour supporter le segment de cage sur un chemin de roulement interne des corps de roulement (3) du palier à rouleaux coniques et/ou des deuxièmes saillies (21) pour supporter le segment de cage (7) sur un chemin de roulement externe (5) des corps de roulement du palier à rouleaux coniques.

7. Palier à rouleaux coniques selon la revendication 6, dans lequel une première région à l'intérieur de laquelle s'étendent les premières saillies (20) entre les deux nervures périphériques (10) et une deuxième région à l'intérieur de laquelle s'étendent les deuxièmes saillies (21) entre les deux nervures périphériques (10), ne se chevauchent pas.

8. Palier à rouleaux coniques selon l'une quelconque des revendications précédentes, dans lequel le segment de cage (7) présente un marquage (22) pour indiquer de manière univoque la position d'installation.
